(19) Europäisches Patentamt
European Patent Office
Office européen des brevets

(11) **EP 3 596 485 B1**

(12) **FASCICULE DE BREVET EUROPEEN**

(45) Date de publication et mention
de la délivrance du brevet:
**19.11.2025  Bulletin 2025/47**

(21) Numéro de dépôt: **18709650.8**

(22) Date de dépôt: **15.03.2018**

(51) Classification Internationale des Brevets (IPC):
**G01S 5/02** (2010.01)   **H04W 36/30** (2009.01)

(52) Classification Coopérative des Brevets (CPC):
**G01S 5/02521; G01S 5/02524; G01S 5/02527;**
**G01S 5/0263; G01S 5/0278; G06N 3/09;**
**H04W 36/302**

(86) Numéro de dépôt international:
**PCT/EP2018/056584**

(87) Numéro de publication internationale:
**WO 2018/167231 (20.09.2018 Gazette 2018/38)**

(54) **PROCÉDÉ ET SYSTÈME DE GÉOLOCALISATION D'UN TERMINAL D'UN SYSTÈME DE COMMUNICATION SANS FIL**

VERFAHREN UND SYSTEM ZUR GEOLOKALISIERUNG EINES ENDGERÄTS EINES DRAHTLOSKOMMUNIKATIONSSYSTEMS

METHOD AND SYSTEM FOR GEOLOCATING A TERMINAL OF A WIRELESS COMMUNICATION SYSTEM

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **15.03.2017  FR 1752090**

(43) Date de publication de la demande:
**22.01.2020  Bulletin 2020/04**

(73) Titulaire: **UNABIZ**
**31670 Labège (FR)**

(72) Inventeur: **ISSON, Olivier**
**31650 Lauzerville (FR)**

(74) Mandataire: **Santarelli**
**Tour Trinity**
**1 bis Place de la Défense**
**92400 Courbevoie (FR)**

(56) Documents cités:
WO-A1-2011/144966     WO-A1-2013/062462
GB-A- 2 498 801      US-A1- 2011 090 081
US-A1- 2012 072 106    US-A1- 2016 191 775

- **KHUONG AN NGUYEN ET AL: "Reliable indoor location prediction using conformal prediction", ANNALS OF MATHEMATICS AND ARTIFICIAL INTELLIGENCE., vol. 74, no. 1-2, 27 October 2013 (2013-10-27), CH, pages 133 - 153, XP055429272, ISSN: 1012-2443, DOI: 10.1007/ s10472-013-9384-4**
- **MOHAMED IBRAHIM ET AL: "CellSense: An Accurate Energy-Efficient GSM Positioning System", IEEE TRANSACTIONS ON VEHICULAR TECHNOLOGY, IEEE SERVICE CENTER, PISCATAWAY, NJ, US, vol. 61, no. 1, 1 January 2012 (2012-01-01), pages 286 - 296, XP011397241, ISSN: 0018-9545, DOI: 10.1109/TVT.2011.2173771**

EP 3 596 485 B1

**Description**

## DOMAINE TECHNIQUE

La présente invention appartient au domaine de la géolocalisation. Notamment, l'invention concerne un procédé de géolocalisation d'un terminal d'un système de communication sans fil. L'invention s'applique particulièrement à la géolocalisation d'un objet connecté à un réseau pour l'Internet des objets.

## ÉTAT DE LA TECHNIQUE

Au cours des dernières années, l'utilisation croissante des systèmes de communication sans fil a naturellement conduit à développer des services basés sur la position géographique d'un utilisateur. L'information sur la position d'un objet peut être utilisée pour la sécurité des usagers (par exemple pour l'assistance aux personnes en danger), l'aide à la navigation, la gestion du trafic, le suivi d'acheminement de marchandises, la télérelève d'informations en général, etc.

Les systèmes de positionnement par satellites comme le GPS (*Global Positioning System*) comptent parmi les techniques de géolocalisation les plus connues. Ces systèmes reposent sur l'exploitation par un terminal récepteur de signaux radio émis par des satellites dédiés. La géolocalisation par GPS est particulièrement précise, mais ce système souffre de plusieurs inconvénients majeurs. Notamment, l'intégration d'un récepteur GPS à un objet nécessite du matériel électronique et du logiciel spécifiques, ce qui peut induire une hausse substantielle du coût de l'objet en question. D'autre part, la consommation énergétique d'un tel récepteur est bien souvent rédhibitoire dans le cas d'objets connectés de type IoT (*Internet of Things*) pour lesquels la consommation énergétique doit être réduite au maximum. Enfin, la pénétration des signaux GPS à l'intérieur des bâtiments ou à travers des obstacles est mauvaise, et cela rend l'utilisation du GPS impropre à la géolocalisation d'objets dans des zones fermées ou denses.

D'autres techniques existent pour géolocaliser un terminal à partir de signaux échangés avec les stations de base d'un réseau d'accès auquel il est connecté. Dans les réseaux cellulaires, comme par exemple le GSM (*Global System for Mobile Communications*), il est connu d'estimer la position d'un terminal comme étant celle de la station de base à laquelle il est actuellement associé, étant entendu qu'un terminal est en général associé à la station de base dont il est le plus proche. Cette méthode présente cependant une précision de géolocalisation médiocre puisque la zone de couverture d'une station de base peut atteindre plusieurs kilomètres, voire plusieurs dizaines de kilomètres de rayon.

D'autres méthodes consistent à estimer les distances qui séparent un terminal de plusieurs stations de base en calculant les temps d'arrivée ou les différences de temps d'arrivée (TOA, *Time Of Arrival* ou TDOA, *Time Difference Of Arrival*) de signaux échangés entre ces entités afin de déterminer la position du terminal par trilatération. Des méthodes analogues se basent sur les angles d'arrivée des signaux (on parle alors de triangulation), ou bien sur des calculs de différence de fréquence d'arrivée des signaux (FDOA, *Frequency Difference Of Arrival*). Cette dernière étant basée sur l'effet Doppler, elle nécessite cependant que le terminal dont on cherche la position soit en mouvement par rapport aux points d'observation. Ces différentes méthodes présentent toutes l'inconvénient de nécessiter du matériel et du logiciel spécifiques. D'autre part elles requièrent souvent une synchronisation coûteuse des différentes stations de base jouant le rôle de points d'observation. En outre, elles sont particulièrement sensibles au phénomène dit de multi-trajet (*multipath* dans la littérature anglo-saxonne) qui correspond à la propagation d'un même signal radio par plusieurs chemins à cause des phénomènes de réflexion, réfraction et diffraction sur les obstacles rencontrés.

D'autres méthodes de géolocalisation se basent sur le niveau de puissance reçue (RSSI, *Received Signal Strength Indicator*) d'un signal échangé entre un terminal et une station de base. Ces méthodes sont particulièrement adaptées aux systèmes de communication sans fil de type réseaux cellulaires (comme par exemple le GSM) pour lesquels l'information de RSSI est directement disponible car elle est exploitée par le système de communication lui-même. Ces méthodes reposent sur le fait qu'un signal radio est atténué dans l'atmosphère et que le niveau de RSSI d'un signal reçu par un récepteur varie donc en fonction de la distance qui sépare le récepteur de l'émetteur du signal. Ainsi, il est possible de déterminer la position géographique d'un terminal par trilatération en estimant la distance séparant le terminal des différentes stations de base qui l'entourent à partir des niveaux de RSSI mesurés par les stations de base. L'inconvénient d'une telle méthode de géolocalisation par trilatération basée sur les niveaux de RSSI est son manque de précision dû au fait que les nombreux paramètres qui influent sur l'atténuation du signal (obstacles, interférences radio, mouvement du terminal, etc.) rendent très complexe la fonction qui définit la distance à partir d'un niveau de RSSI.

C'est pour cette raison que de nouveaux procédés de géolocalisation basés sur les niveaux de RSSI ont été développés pour tourner le problème de l'atténuation du signal en un avantage. Ces nouveaux procédés ne mettent pas en œuvre des méthodes de trilatération, et ils ne nécessitent donc pas a priori de connaître la position géographique des stations de base. En revanche, ils se basent sur l'hypothèse que le niveau de RSSI en un point donné est stable dans le temps, et reposent sur des techniques d'apprentissage automatique (*Machine Learning* dans la littérature anglo-saxonne) qui associent une empreinte (*fingerprint*) à une position de la zone géographique considérée. Concrètement, il s'agit de construire dans une première phase de calibration (aussi appelée phase d'apprentissage « hors ligne » ou *offline phase* en anglais), une base de données qui associe à des positions géographiques connues une « signature radio » correspondant à l'ensemble des niveaux de RSSI mesurés pour un terminal à la position considérée pour un ensemble de stations de base du système. Ensuite, pendant une phase de recherche (aussi appelée phase d'apprentissage « en ligne » ou *online stage* en anglais), une signature radio observée pour un terminal situé à une position inconnue est comparée à l'ensemble des signatures de la base de données afin d'estimer la position du terminal à partir de la (ou des) position(s) correspondant à la (aux) signature(s) la (les) plus proche(s).

Plusieurs méthodes d'apprentissage automatique ont été employées dans ce but. Le document Reliable indoor location prediction using conformal prediction - Khuong An Nguyen, Zhiyuan Luo - Springer Science+Business Media Dordrecht 2013 décrit par exemple l'utilisation d'une méthode d'apprentissage automatique supervisée sous deux perspectives différentes. Il présente d'une part le problème sous une approche de « classification » dans laquelle la méthode d'apprentissage va chercher à faire correspondre une signature radio observée à une ou plusieurs signatures radio de la base de données qui sont les plus ressemblantes à la signature observée. D'autre part, il présente le problème sous une approche de « régression » dans laquelle la méthode d'apprentissage va chercher à déterminer, à partir des informations contenues dans la base de données, une fonction qui définit au mieux une position géographique en fonction d'une signature radio. Le document CellSense : An Accurate Energy-Efficient GSM Position System - Mohamed Ibrahim, Moustafa Youssef - IEEE 2011*, décrit quant à lui une méthode d'apprentissage de classification légèrement différente dans la mesure où elle utilise une approche probabiliste : la zone géographique considérée est divisée en cellules, et pour chaque cellule sont définies les probabilités d'avoir un certain niveau de RSSI pour une station de base donnée. Il s'agit alors de déterminer la cellule pour laquelle la probabilité d'avoir la signature radio observée est maximale.

Toutes ces méthodes d'apprentissage automatique basées sur les niveaux de RSSI présentent les mêmes inconvénients. Tout d'abord, la phase de calibration est particulièrement lourde et coûteuse, surtout si la zone géographique à couvrir est très vaste. Pour réaliser cette phase de calibration, il est connu d'embarquer dans une flotte de véhicules qui parcourent la zone à couvrir des appareils adaptés pour fournir avec précision la position géographique et les niveaux de RSSI pour les stations de base du système de communication en différents points (le terme anglais pour qualifier cette phase est *war-driving*). Plus le nombre de points est important, meilleures seront les performances du procédé de géolocalisation en termes de précision, mais plus la phase de calibration sera longue et coûteuse. Aussi, plus la zone géographique à couvrir est vaste, et plus le nombre de stations de base à prendre en compte dans la base de données est grand, et plus la complexité de l'algorithme d'apprentissage automatique utilisé sera importante. Cela explique pourquoi les méthodes connues de géolocalisation basées sur les niveaux de RSSI s'appliquent en général à des zones fermées (par exemple à l'intérieur de bâtiments) ou bien sur des zones géographiques restreintes (par exemple des zones urbaines limitées à quelques km$^2$). Enfin, un autre inconvénient majeur réside dans le fait que la signature radio utilisée par les méthodes connues de géolocalisation basées sur les niveaux de RSSI est entièrement dépendante de la topologie du réseau au moment où est réalisée la phase de calibration. En effet, dans de telles méthodes, si q représente le nombre de stations de base du système de communication au moment où est réalisée la phase de calibration, alors la signature radio est un vecteur $s = (s_1, s_2, ..., s_q)$ où $s_i$ représente le niveau de RSSI pour la station de base $i$. L'ensemble des stations de base $i \in [1..q]$ qui permet de déterminer une signature radio est donc un ensemble figé défini a priori. Par conséquent, si une station de base n'est temporairement plus opérationnelle (par exemple si elle est en maintenance), la méthode de géolocalisation ne sera potentiellement plus applicable. Aussi, si la topologie du réseau change durablement (déploiement de nouvelles stations de base, suppression ou remplacement de stations existantes) il est nécessaire de reconduire une phase de calibration pour avoir une phase de recherche efficace.

A titre d'exemple, la demande de brevet US 2016/191775 A1 divulgue une méthode de géolocalisation d'un terminal basée sur des signatures radio. Ce document mentionne le problème de l'obsolescence des signatures radio dans la base de données lorsqu'il y a un changement de topologie du réseau. Il est alors proposé une méthode pour mettre à jour automatiquement et régulièrement la base de données.

## EXPOSÉ DE L'INVENTION

La présente invention a pour objectif de remédier à tout ou partie des inconvénients de l'art antérieur, notamment ceux exposés ci-avant.

À cet effet, et selon un premier aspect, l'invention concerne un procédé de géolocalisation d'un terminal, dit « terminal d'intérêt », selon la revendication 1.

Ainsi, la complexité de l'algorithme d'apprentissage utilisé pour estimer la position géographique recherchée est réduite car la taille de la signature radio est limitée. En effet, le nombre N de stations de base pour lesquelles les mesures ont été sélectionnées peut être significativement inférieur au nombre total de stations de base du système. Par exemple, il est envisageable de n'utiliser que 10 valeurs mesurées pour un système comptant plusieurs centaines voire plusieurs milliers de stations de base. Le procédé de géolocalisation est ainsi adapté à de vastes zones géographiques.

Le fait d'inclure dans la signature radio les positions géographiques des stations de base dont les mesures ont été sélectionnées permet de pallier le fait que la signature radio ainsi réduite n'est plus déterministe puisque la collection de stations de base utilisées pour la définir n'est plus figée : elle varie en fonction de la position géographique à laquelle la signature radio est observée. En outre, cela rend la méthode d'apprentissage résistante aux changements de topologie du réseau d'accès. En effet, si une station de base est ajoutée, supprimée ou remplacée, une signature radio ainsi déterminée restera pertinente, contrairement aux méthodes connues d'apprentissage pour lesquelles une signature radio est construite à partir d'un ensemble de stations de base figé, ordonné et défini a priori.

Dans des modes particuliers de mise en œuvre, l'invention peut comporter en outre l'une ou plusieurs des caractéristiques suivantes, selon toutes les combinaisons définies par les revendications dépendantes.

Dans des modes particuliers de mise en œuvre, les N valeurs sélectionnées correspondent aux N valeurs qui représentent les meilleures qualités de lien radio mesurées pour les stations de base, éventuellement ordonnées par ordre décroissant.

Dans des modes préférés de mise en œuvre, le lien radio est un lien montant vers les stations de base du système de communication sans fil, et des terminaux du système de communication sans fil équipés d'un système de positionnement jouent le rôle de dispositifs de calibration. Ces terminaux sont alors appelés « terminaux de calibration ». La détermination de la signature radio d'un terminal de calibration situé en une position géographique comporte les étapes suivantes :

- émission par le terminal de calibration d'un message comportant la position géographique courante, mesurée par le système de positionnement, à destination de la pluralité de stations de base,
- mesure, par chacune de la pluralité de stations de base, d'une valeur représentative de la qualité du lien radio existant entre ledit terminal de calibration et la station de base considérée à partir du message reçu dudit terminal de calibration,
- sélection, par un serveur relié aux stations de base, de N valeurs parmi l'ensemble des valeurs mesurées,
- formation, par le serveur, de la signature radio du terminal de calibration situé à ladite position géographique courante en y incluant les N valeurs sélectionnées et les positions géographiques des stations de base utilisées pour mesurer les N valeurs sélectionnées,
- extraction, par le serveur, de la position géographique contenue dans ledit message.

Ainsi, en supposant que certains terminaux du système de communication ont la capacité de connaître leur position géographique et de la remonter au réseau d'accès dans certains messages, alors la phase de calibration peut se faire de manière complètement automatique, c'est-à-dire sans avoir recours à une méthode coûteuse de « *war-driving* » consistant à embarquer dans une flotte de véhicules des appareils adaptés pour mesurer à la fois une position géographique et la signature radio associée afin d'acquérir des données de référence. De plus, les terminaux de calibration n'interviennent pas nécessairement de manière spécifique dans le procédé de géolocalisation. En effet, les messages envoyés par les terminaux de calibration peuvent être émis de manière indépendante au procédé de géolocalisation, c'est-à-dire avec un objectif autre que celui de participer au procédé de géolocalisation. Ainsi, la consommation énergétique et le coût de fabrication des terminaux ne sont pas affectés par le procédé de géolocalisation.

Dans des modes particuliers de mise en œuvre, les terminaux de calibration sont mis en œuvre pendant une durée prédéfinie pour former l'ensemble de données de référence, ou bien l'ensemble de données de référence est continuellement enrichi par de nouvelles données provenant des terminaux de calibration.

Dans des modes préférés de mise en œuvre la détermination de la signature radio du terminal d'intérêt situé en une position géographique à estimer comporte les étapes suivantes :

- émission par le terminal d'intérêt d'un message à destination de la pluralité de stations de base,
- mesure, par chacune de la pluralité de stations de base, d'une valeur représentative de la qualité du lien radio existant entre ledit terminal d'intérêt et la station de base considérée à partir du message reçu dudit terminal d'intérêt,

- sélection, par un serveur relié aux stations de base, de N valeurs parmi l'ensemble des valeurs mesurées,
- formation, par le serveur, de la signature radio du terminal d'intérêt en y incluant les N valeurs sélectionnées et les positions géographiques des stations de base utilisées pour mesurer les N valeurs sélectionnées.

Dans des modes particuliers de mise en œuvre, la position géographique estimée du terminal d'intérêt et la signature radio associée sont ajoutées à l'ensemble de données de référence.

Dans des modes préférés de mise en œuvre, l'invention peut comporter en outre l'une ou plusieurs des caractéristiques suivantes, selon toutes les combinaisons définies par les revendications dépendantes :

- la valeur représentative de la qualité du lien radio existant entre un terminal ou un dispositif de calibration et une station de base est un niveau de puissance reçue d'un signal radio échangé entre ladite station de base et ledit terminal ou ledit dispositif de calibration,

- le lien radio est un canal de communication à bande ultra étroite,
- le nombre N de valeurs sélectionnées lors de la détermination d'une signature radio est un entier positif compris entre 5 et 20.

Selon un second aspect, l'invention concerne un système de communication sans fil selon la revendication 14.

## PRÉSENTATION DES FIGURES

L'invention sera mieux comprise à la lecture de la description suivante, donnée à titre d'exemple nullement limitatif, et faite en se référant aux figures 1 à 6 qui représentent :

- Figure 1 : une représentation schématique d'un système de communication sans fil comportant un dispositif de calibration,
- Figure 2 : un diagramme illustrant les étapes principales d'un procédé de géolocalisation d'un terminal d'un système de communication sans fil,
- Figure 3 : une représentation schématique d'un mode préféré de réalisation où le dispositif de calibration est un terminal équipé d'un système de positionnement,
- Figure 4 : un diagramme illustrant les étapes principales de la phase de calibration d'un mode préféré de mise en œuvre du procédé de géolocalisation,
- Figure 5 : un diagramme illustrant les étapes principales de la phase de recherche d'un mode préféré de mise en œuvre du procédé de géolocalisation,
- Figure 6 : un graphique représentant deux courbes de la distribution d'erreur de géolocalisation pour deux valeurs différentes de N.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

Tel qu'indiqué précédemment, la présente invention vise à géolocaliser un terminal, dit « terminal d'intérêt », d'un système de communication sans fil à l'aide d'une méthode d'apprentissage basée sur des informations représentatives de la qualité de liens radio existant entre ledit terminal et des stations de base dudit système de communication sans fil.

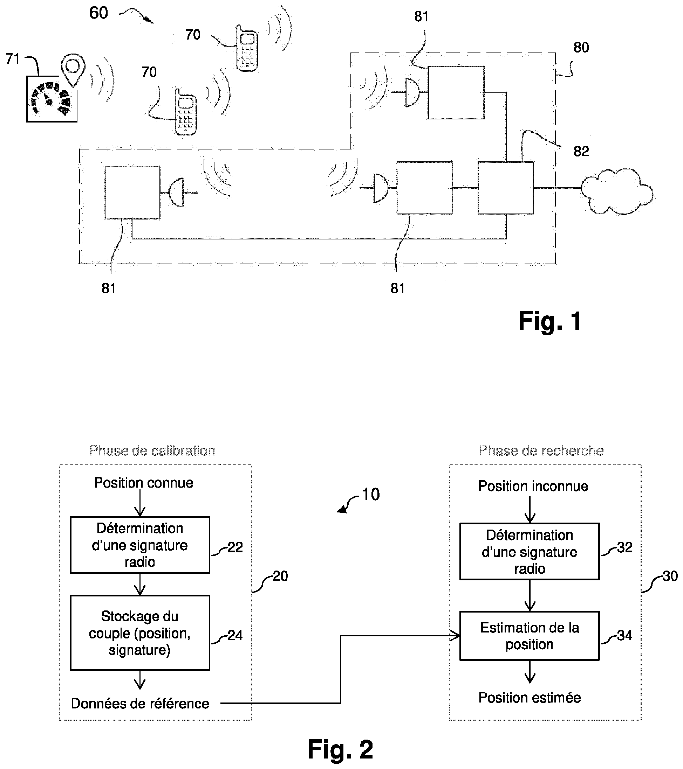

La figure 1 représente schématiquement un système 60 de communication sans fil, comportant plusieurs terminaux 70 et un réseau d'accès 80 comportant plusieurs stations de base 81 reliées à un serveur 82. Dans un tel système, les communications peuvent généralement être bidirectionnelles, c'est-à-dire que des données peuvent être transmises du réseau d'accès vers un terminal sur un lien radio descendant, ou bien d'un terminal vers le réseau d'accès sur un lien radio montant. Aussi, une mesure de la qualité du lien radio existant entre un terminal et une station de base du réseau d'accès peut par exemple être effectuée par l'une ou l'autre de ces entités.

Aussi, il est possible d'introduire dans le système 60 de communication sans fil un ou plusieurs dispositifs 71 de calibration adaptés pour déterminer avec précision la position géographique courante, par exemple avec un système de positionnement tel qu'un récepteur GPS. Ce dispositif de calibration possède en outre des moyens configurés pour permettre la mesure d'une valeur représentative de la qualité du lien radio existant entre lui et les stations de base du réseau d'accès. Comme indiqué précédemment, cette mesure peut par exemple être faite par le dispositif de calibration lui-même, sur le lien descendant, ou bien par une station de base du réseau d'accès, sur le lien montant. Si la mesure est effectuée par le dispositif de calibration sur le lien descendant, cette mesure peut par exemple être faite sur des signaux radio destinés à d'autres terminaux du système que le dispositif de calibration.

Les valeurs représentatives de la qualité de lien radio existant entre un terminal ou un dispositif de calibration et une station de base peuvent être transmises au serveur 82 afin qu'il mette en œuvre certaines étapes d'un procédé de géolocalisation.

La figure 2 représente les deux principales phases d'un tel procédé 10 de géolocalisation d'un terminal 70 d'intérêt d'un système 60 de communication sans fil.

Une première phase 20 de calibration (aussi appelée phase d'apprentissage « hors ligne » ou *offline stage* en anglais), comporte :

- une étape de détermination 22 de signatures radio associées respectivement à des positions géographiques connues, chaque signature radio correspondant à un ensemble de valeurs représentatives de la qualité de liens radio existant entre un dispositif 71 de calibration dont la position géographique est connue et une pluralité de stations de base 81 du réseau d'accès 80 du système 60 de communication sans fil, et

- une étape de stockage 24 dans un ensemble de données de référence de chaque signature radio déterminée et de la position géographique associée du dispositif 71 de calibration.

Par « position géographique », on entend par exemple un système d'au moins deux coordonnées qui sont le plus souvent la latitude et la longitude, auxquelles peut optionnellement s'ajouter une troisième coordonnée : l'altitude par rapport au niveau moyen de la mer (élévation orthométrique).

En résumé, il s'agit pendant cette phase 20 de calibration de faire une sorte de cartographie radio de la zone géographique considérée.

Ensuite, une phase 30 de recherche (aussi appelée phase d'apprentissage « en ligne » ou *online stage* en anglais), comporte :

- une étape de détermination 32 d'une signature radio pour ledit terminal 70 d'intérêt situé à une position géographique à estimer,
- une étape d'estimation 34 de la position géographique dudit terminal d'intérêt à partir de la signature radio déterminée et de l'ensemble des données de référence acquises pendant la phase 20 de calibration.

Dans la suite de la description, on se place à titre d'exemple et de manière non limitative dans le cas d'un système 60 de communication sans fil à bande ultra étroite. Par « bande ultra étroite » (*Ultra Narrow Band* ou UNB dans la littérature anglo-saxonne), on entend que le spectre fréquentiel instantané des signaux radioélectriques émis par les terminaux est de largeur fréquentielle inférieure à deux kilohertz, voire inférieure à un kilohertz. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz). De tels systèmes de communication sans fil UNB sont particulièrement adaptés pour des applications du type M2M (acronyme anglo-saxon pour *Machine to Machine*) ou du type IoT (*Internet of Things*).

Dans un tel système 60 de communication sans fil, les échanges de données sont essentiellement monodirectionnels, en l'occurrence sur un lien montant des terminaux 70 vers le réseau d'accès 80 dudit système de communication sans fil. Afin de minimiser les risques de perdre un message émis par un terminal, la planification du réseau d'accès est souvent réalisée de telle sorte qu'une zone géographique donnée est couverte simultanément par plusieurs stations de base 81, de telle manière qu'un message émis par un terminal peut être reçu par plusieurs stations de base.

Chaque station de base 81 est adaptée à recevoir des messages des terminaux 70 qui se trouvent à sa portée. Chaque message ainsi reçu est par exemple transmis au serveur 82 du réseau d'accès 80, éventuellement accompagné d'autres informations comme un identifiant de la station de base qui l'a reçu, une valeur représentative de la qualité du signal radio transportant le message, la fréquence centrale sur laquelle le message a été reçu, etc. Le serveur 32 traite par exemple l'ensemble des messages reçus des différentes stations de base 81. Le serveur 32 peut notamment être utilisé pour la mise en œuvre du procédé 10 de géolocalisation d'un terminal du système.

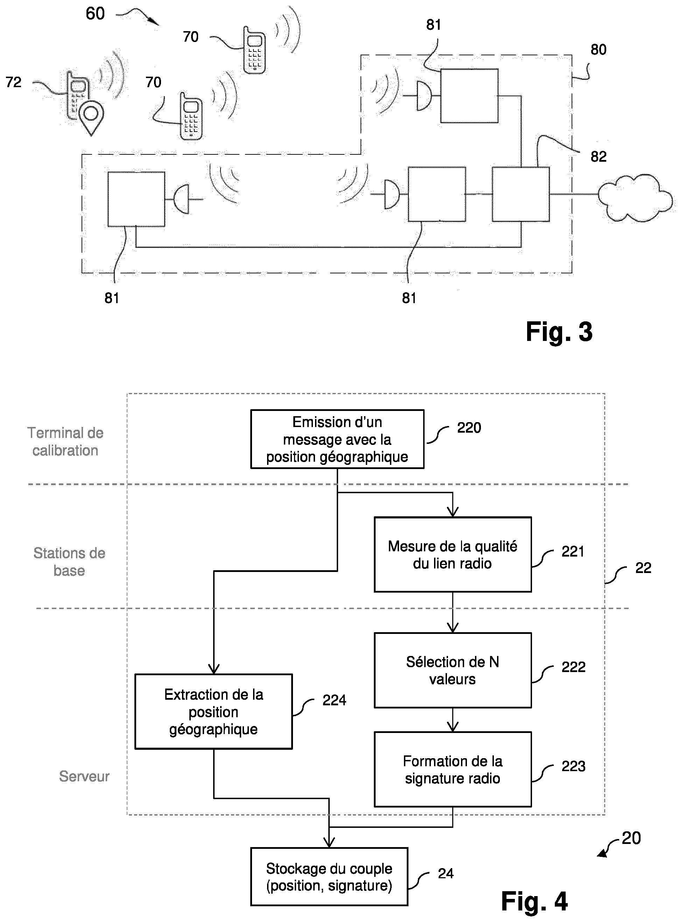

La figure 3 représente schématiquement un mode préféré de réalisation d'un tel système 60 dans lequel certains terminaux 72 du système 60 de communication sans fil, dit « terminaux de calibration », possèdent un système de positionnement (par exemple un récepteur GPS) qui permet d'obtenir avec précision la position géographique du terminal (par exemple quand celui-ci est situé à un endroit où il peut capter les signaux des satellites dudit système de positionnement). Ces terminaux 72 de calibration jouent le rôle des dispositifs 71 de calibration mentionnés précédemment en plus de leurs fonctions courantes dans le système 60 de communication sans fil.

La figure 4 représente les principales étapes de la phase 20 de calibration d'un mode préféré de mise en œuvre du procédé 10 de géolocalisation d'un terminal 70 d'intérêt d'un système 60 de communication sans fil.

Pour cette phase de calibration, plutôt que de parcourir intentionnellement la zone géographique à couvrir avec un appareil spécifique adapté pour déterminer une position géographique et mesurer des valeurs représentatives de qualité de lien radio à cette position, il est préférable (car moins coûteux et plus rapide) d'utiliser la capacité éventuelle de certains terminaux du système à remplir ce rôle, c'est le cas des terminaux 72 de calibration.

Ainsi, une étape de la phase 20 de calibration consiste en l'émission 220 par un terminal 72 de calibration d'un message contenant la position géographique courante à destination du réseau d'accès 80 du système 60 de communication sans fil. Il est à noter que ce message peut être émis de manière indépendante au procédé de géolocalisation. Par exemple, il peut s'agir d'un message de télérelève d'information conventionnel incluant la position géographique courante et n'ayant pas pour objectif premier de participer à la phase 20 de calibration du procédé 10 de géolocalisation.

Les stations de base 81 du réseau d'accès 80 qui ont reçu le signal contenant ledit message font alors une mesure 221 de la qualité du lien radio sur lequel le message a été transmis. Dans un mode préféré de mise en œuvre, et pour la suite de la description à titre d'exemple non limitatif, la valeur représentative de la qualité du lien radio utilisée est le niveau moyen de puissance reçue (RSSI), par exemple exprimé en décibel, par la station de base pour le signal transportant ledit message. Pour les stations de base qui n'ont pas reçu le message, par exemple parce que le terminal est trop éloigné et ne se trouve pas sous leur couverture radio, une valeur par défaut de -160 dB est par exemple utilisée.

Il est à noter que d'autres valeurs représentatives de la qualité du lien radio pourraient être utilisées, comme par exemple l'atténuation du signal, un rapport signal sur bruit du signal (SNR ou *Signal on Noise Ratio* dans la littérature anglo-saxonne) ou bien un indicateur de qualité du canal de communication (CQI ou *Channel Quality Indicator* en anglais).

Les niveaux de RSSI mesurés par les différentes stations de base 81 sont transmis au serveur 82 qui peut alors définir la signature radio observée à la position géographique considérée.

La méthode connue de l'art antérieur pour définir une signature radio est de considérer les valeurs respectives des niveaux de RSSI pour une collection figée et préalablement définie de stations de base du système de communication sans fil dont la couverture radio présente une intersection non nulle avec la zone géographique considérée. Dans le cas où l'on souhaite que le procédé de géolocalisation couvre un pays entier, voire un ensemble de pays, comme cela peut être le cas pour un réseau étendu de type WAN (*Wide Area Network*), il faut s'attendre à devoir considérer plusieurs centaines voire plusieurs milliers de stations de base, et à voir exploser la complexité de l'algorithme d'apprentissage automatique.

Au contraire, la signature radio définie pour le mode de mise en œuvre présentement décrit réduit cette complexité par une étape de sélection 222 de seulement N valeurs parmi les niveaux de RSSI mesurés.

Dans un mode préféré de mise en œuvre, et pour la suite de la description à titre d'exemple non limitatif, les N valeurs sélectionnées correspondent aux N valeurs qui représentent les meilleurs niveaux de RSSI mesurés par les stations de base du système de communication sans fil. Il convient cependant de noter que d'autres méthodes de sélection pourraient être envisagées. Par exemple, la sélection pourrait favoriser les valeurs les plus récemment mesurées, ou bien se faire selon un critère de pertinence visant à utiliser les valeurs les plus discriminantes pour la construction du modèle. Dans un autre exemple, il est envisageable d'ordonner les N valeurs sélectionnées par ordre décroissant.

Cette limitation du nombre de composantes de la signature radio a cependant pour conséquence que sa structure n'est plus déterministe car la collection de stations de base utilisées pour définir une signature radio n'est plus figée : elle varie en fonction de la position géographique à laquelle la signature radio est observée et n'est donc pas nécessairement la même pour deux signatures radio déterminées pour deux positions géographiques différentes. Aussi, il n'est pas possible de comparer une signature radio directement avec une autre puisque deux signatures radio n'ont pas forcément été construites à partir des mesures provenant des mêmes stations de base. Pour pallier cette perte de déterminisme, il convient d'ajouter une information supplémentaire. C'est pourquoi, dans une étape de formation 223 de la signature radio, les positions géographiques des N stations de base utilisées pour mesurer les N valeurs sélectionnées sont incluses dans la signature radio en plus des N valeurs sélectionnées. La position géographique de chaque station de base 81 du réseau d'accès 80 du système 60 de communication sans fil peut par exemple être transmise au serveur 82 pendant la phase de déploiement du réseau d'accès, et à chaque fois qu'une nouvelle station de base est ajoutée ou déplacée.

Une signature radio est ainsi avantageusement définie par un ensemble de mesures effectuées pour un ensemble de stations de base qui n'est pas défini a priori, et à chaque mesure est associée la position géographique de la station de base utilisée pour la mesure. Par conséquent, même si la topologie du réseau d'accès change, par exemple si des stations de base utilisées pour les mesures d'une signature radio sont supprimées, ou si de nouvelles stations de base sont ajoutées, une signature radio restera pertinente puisqu'elle sera toujours représentative de niveaux de RSSI mesurés pour des stations de base « potentiellement » situées aux positions géographiques considérées.

En considérant à titre d'exemple non limitatif que la position géographique d'une station de base est définie par sa latitude et sa longitude, une signature radio observée en une position géographique donnée peut être représentée par le vecteur S de dimension 3.N :

$$S = (RSSI_1, Lat_1, Lng_1, RSSI_2, Lat_2, Lng_2, ..., RSSI_N, Lat_N, Lng_N) \quad [1]$$

expression dans laquelle, pour $i \in [1..N]$:

- $RSSI_i$ est la i$^{ème}$ valeur dans la collection des N niveaux de RSSI les plus grands mesurés par les stations de base,
- $Lat_i$ est la latitude de la station de base ayant mesuré $RSSI_i$, et
- $Lng_i$ est la longitude de la station de base ayant mesuré $RSSI_i$.

Il convient de noter que l'ordre des paramètres de latitude et longitude dans la signature radio n'a pas forcément d'importance. Par exemple la signature pourrait aussi être représentée par le vecteur S1 :

$$S1 = (RSSI_1, RSSI_2, ..., RSSI_N, Lat_1, Lng_1, Lat_2, Lng_2, ..., Lat_N, Lng_N) \quad [2]$$

ou bien par le vecteur S2 :

$$S2 = (RSSI_1, RSSI_2,..., RSSI_N, Lat_1, Lat_2,..., Lat_N, Lng_1, Lng_2,..., Lng_N) \quad [3]$$

Dans un mode préféré de mise en œuvre, s'il y a moins que N stations de base qui ont reçu le message, alors la latitude et la longitude associées aux valeurs RSSI de -160 dB incluses dans la signature radio sont mises à la valeur arbitraire zéro. Dans d'autres modes de mise en œuvre, il serait par exemple envisageable d'utiliser les positions géographiques des stations de base les plus proches de celles qui ont reçu le message. Ce choix peut avoir un impact plus ou moins important en fonction de l'algorithme d'apprentissage automatique utilisé.

Le serveur 82 procède aussi à l'extraction 224 de l'information sur la position géographique contenue dans le message émis par le terminal 72 de calibration (pour rappel, ce message a été préalablement transmis au serveur 82 par les stations de base 81 qui l'ont reçu).

Finalement, dans une dernière étape, le couple d'information formé par la position géographique du terminal 72 de calibration et la signature radio associée est ajouté à l'ensemble des données de référence acquises pendant la phase de calibration. Par exemple, cette étape consiste au stockage 24 du couple d'information formé par la position géographique et la signature radio associée dans une base de données mémorisée au sein du serveur 82.

Dans des modes particuliers de mise en œuvre, les étapes de la phase 20 de calibration décrites ci-avant sont répétées pendant une durée prédéfinie, par exemple pendant plusieurs jours, voire plusieurs semaines ou plusieurs mois, pour des terminaux 72 de calibration du système 60 de communication sans fil, ceci afin d'obtenir un ensemble de données de référence contenant un nombre conséquent d'informations, c'est-à-dire une cartographie précise de la zone à couvrir. Dans d'autres exemples, les étapes de la phase 20 de calibration pourraient être répétées jusqu'à obtenir un nombre prédéfini de données de référence.

Dans des modes préférés de mise en œuvre, l'ensemble des données de référence est continuellement enrichi par de nouvelles données provenant des terminaux de calibration. Ainsi, si la topologie du réseau d'accès change (par exemple si des stations de base sont supprimées ou si de nouvelles stations de base sont déployées), alors l'ensemble de données de référence sera mis à jour avec de nouvelles informations qui rendront le modèle plus proche de la réalité et qui augmenteront en conséquence la précision des estimations de la phase de recherche.

Il convient de noter que les terminaux 72 de calibration peuvent être mobiles et ils peuvent par conséquent fournir des données de référence correspondant à différentes positions géographiques.

Il convient également de noter que selon d'autres exemples de mise en œuvre, l'information sur la position géographique courante du terminal 72 de calibration pourrait être émise par un autre système de communication que celui pour lequel sont faites les mesures de RSSI permettant de définir la signature radio dudit terminal de calibration. Par exemple, la position géographique courante du terminal 72 de calibration pourrait être émise au serveur 82 via un réseau de téléphonie mobile du type GSM, UMTS ou LTE, alors que le message pour lequel sont effectuées les mesures de RSSI est émis vers le réseau d'accès 80 du système 60 de communication sans fil UNB de notre exemple. Afin de faciliter, au niveau du serveur 82, l'association de la signature radio déterminée pour le terminal 72 de calibration avec sa position géographique courante, il est envisageable, par exemple, d'horodater le message transportant l'information sur la position géographique courante et le message émis vers le système de communication sans fil UNB.

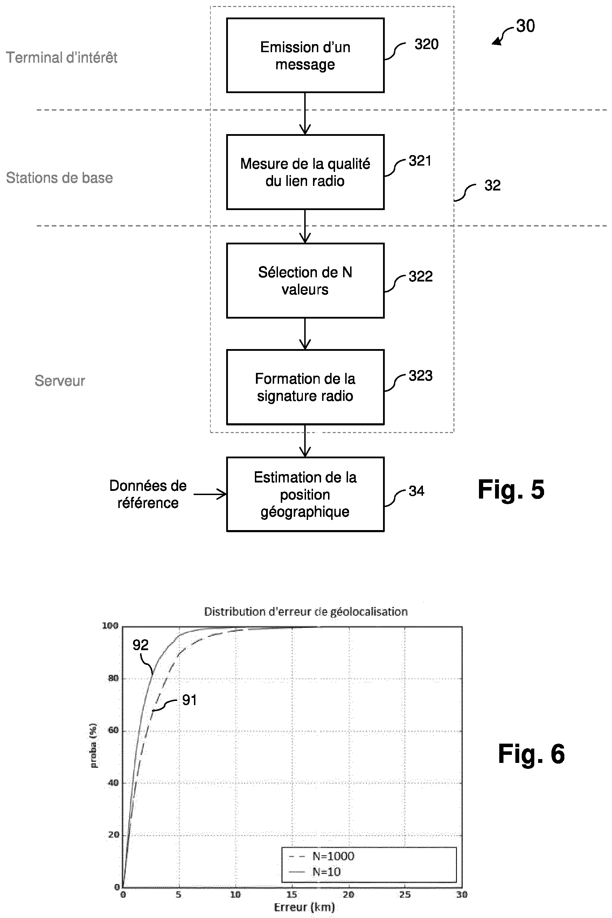

La figure 5 représente les principales étapes de la phase 30 de recherche pour un mode préféré de mise en œuvre du procédé 10 de géolocalisation d'un terminal 70 d'intérêt d'un système 60 de communication sans fil.

Cette phase 30 de recherche est initiée par l'émission 320 d'un message par un terminal 70 d'intérêt à destination du réseau d'accès 80 du système 60 de communication sans fil. Ce message peut être un message quelconque émis de manière indépendante au procédé de géolocalisation du terminal. Par exemple, ce message peut être émis à des fins de télérelève d'informations qui n'ont rien à voir avec la géolocalisation du terminal. Alternativement, ce message peut être émis intentionnellement dans le but de géolocaliser le terminal. Dans tous les cas, le contenu du message n'a pas nécessairement d'importance dans la phase 30 de recherche.

Similairement à ce qui est fait pour la phase 20 de calibration, les stations de base 81 du réseau d'accès 80 qui ont reçu ledit message procèdent à une mesure 321 du niveau de RSSI du signal transportant le message.

Les niveaux de RSSI mesurés par les différentes stations de base sont transmis au serveur 82 qui peut alors définir la signature radio observée à la position géographique recherchée. La définition de la signature radio pour la phase 30 de recherche est par exemple réalisée de la même manière que pour la phase 20 de calibration : par une étape de sélection 322 de N valeurs correspondant aux valeurs les plus grandes parmi les niveaux de RSSI mesurés, et par une étape de formation 323 de la signature radio en y incluant, outre les N valeurs sélectionnées, les positions géographiques des N stations de base utilisées pour mesurer les N valeurs sélectionnées. Dans le mode préféré de mise en œuvre présentement décrit, la signature radio observée a la même structure que le vecteur S de l'expression [1].

L'estimation 34 de la position géographique du terminal 70 ayant émis le message est alors effectuée à partir d'une part de l'ensemble de données de référence acquises pendant la phase 20 de calibration et d'autre part de la signature radio déterminée pour le terminal d'intérêt dont la position géographique doit être estimée.

Dans des modes préférés de mise en œuvre, un algorithme d'apprentissage automatique de régression basé sur une technique de forêts d'arbres décisionnels (*Random Forest* dans la littérature anglo-saxonne) est utilisé pour estimer la fonction qui prédit au mieux une position géographique à partir d'une signature radio en se basant sur le modèle correspondant à l'ensemble des données de référence. Il convient de noter que d'autres techniques d'apprentissage automatique supervisé de regression pourraient être utilisées (par exemple un algorithme de réseau de neurones, un algorithme de régression linéaire ou polynomiale, un algorithme du type *Ridge Regression,* etc...), et ils ne constitueraient que des variantes de mise en œuvre de la présente invention.

Autrement dit, si M est le nombre total de données de référence, c'est-à-dire le nombre de couples $(P_j, S_j), j \in [1..M]$ acquis pendant la phase de calibration, où $P_j$ est une position géographique connue d'un dispositif 71 de calibration et $S_j$ la signature radio associée, avec :

$$S_j = (RSSI_{j,1}, Lat_{j,1}, Lng_{j,1}, ..., RSSI_{j,k}, Lat_{j,k}, Lng_{j,k}, ...RSSI_{j,N}, Lat_{j,N}, Lng_{j,N})$$

$$P_j = (Lat_j, Lng_j)$$

alors l'algorithme de régression fournit la fonction estimée *f* qui vérifie au mieux l'ensemble des équations matricielles définit par :

$$P_j = f(S_j), \forall j \in [1..M]$$

Dans ces expressions, pour $j \in [1..M]$, $k \in [1..N]$ :

- $RSSI_{j,k}$ est la $k^{ème}$ valeur dans la collection des N niveaux de RSSI les plus grands mesurés par les stations de base pour un terminal situé à la position géographique $P_j$,
- $Lat_{j,k}$ est la latitude de la station de base ayant mesuré $RSSI_{j,k}$,
- $Lng_{j,k}$ est la longitude de la station de base ayant mesuré $RSSI_{j,k}$,
- $Lat_j$ est la latitude de la position géographique $P_j$
- $Lng_j$ est la longitude de la position géographique $P_j$

Ainsi, à partir d'une signature radio observée $S_R$ pour le terminal d'intérêt situé à une position géographique recherchée $P_R$, il est possible d'estimer $P_R$ comme étant :

$$P_R = f(S_R)$$

Dans des modes particuliers de mise en œuvre, lorsque la position géographique $P_R$ d'un terminal est estimée pendant la phase 30 de recherche à partir de sa signature radio $S_R$ associée, alors le couple $(P_R, S_R)$ est ajouté à l'ensemble de données de référence. Ainsi, l'ensemble de données de référence est continuellement enrichi avec de nouvelles données qui rendent le modèle plus complet et par conséquent les prédictions ultérieures plus précises.

Des simulations ont été faites pour les modes préférés de réalisation et de mise en œuvre décrits ci-dessus. Elles mettent en évidence des gains de performance en termes de réduction de complexité et de précision de géolocalisation.

En ce qui concerne la réduction de la complexité, ces simulations montrent en effet que le temps de calcul nécessaire à l'étape d'estimation 34 d'une position géographique d'un terminal varie de manière quasiment linéaire en fonction du nombre N de valeurs sélectionnées pendant les étapes 222 et 322 des étapes de détermination 22 et 32 d'une signature radio. Autrement dit, si le nombre de valeurs sélectionnées est divisé par cent, le temps de calcul est sensiblement divisé par cent aussi.

En ce qui concerne la précision de géolocalisation, les simulations montrent qu'elle augmente significativement avec N jusqu'à la valeur N=10 à partir de laquelle le gain devient négligeable. La valeur N=10 est donc celle qui offre le meilleur compromis entre complexité et précision. Quand N prend des valeurs importantes (par exemple supérieur à quelques centaines), alors la précision de géolocalisation diminue.

En effet, la figure 6 représente deux courbes de la distribution d'erreur de géolocalisation : une courbe 91 correspondant à une valeur N=1000, et une courbe 92 correspondant à une valeur N=10. Les résultats montrent que pour N=1000, l'erreur de géolocalisation est inférieure à 5 kilomètres dans 90% des cas, alors que pour N=10, l'erreur de géolocalisation est inférieure à 3.5 kilomètres dans 90% des cas.

Une précision de géolocalisation de l'ordre du kilomètre est tout à fait acceptable pour un grand nombre d'applications liées au système de communication considéré, comme par exemple le suivi de marchandises à travers un ou plusieurs pays.

Les modes de réalisation et de mise en œuvre décrits ci-dessus résolvent les problèmes énoncés dans la description de l'art antérieur et apportent en outre des avantages supplémentaires.

En particulier, en limitant le nombre N de valeurs sélectionnées le procédé de géolocalisation décrit est adapté pour couvrir de très grandes zones géographiques, à savoir un pays entier, voire plusieurs pays, tout en maintenant des performances en termes de complexité (temps de calcul) et de précision de géolocalisation tout à fait satisfaisantes pour les applications visées.

De plus, en s'affranchissant d'utiliser une collection figée et définie a priori de station de base pour définir la signature radio, et en introduisant dans la signature radio les positions géographiques des stations de base correspondant aux N valeurs sélectionnées, le procédé de géolocalisation est particulièrement résistant aux changements de topologie du réseau d'accès puisque les signatures radio restent pertinentes même si des stations de base sont supprimées ou ajoutées.

En outre, la mise en place d'une telle méthode de géolocalisation au sein d'un système de communication sans fil comme celui qui a été décrit à titre d'exemple est particulièrement peu onéreuse. En effet, grâce à l'existence de terminaux équipés d'un système de positionnement dans le système de communication, elle ne nécessite pas de matériel spécifique additionnel au niveau des terminaux ou des stations de base, elle permet d'automatiser entièrement la phase de calibration, et elle n'est quasiment pas impactée par les mises à jour du réseau d'accès (ajout ou suppression de stations de base).

Enfin, il est important de noter que dans les modes préférés de réalisation décrits, le procédé de géolocalisation n'a aucun impact sur la consommation énergétique des terminaux ou des stations de base du système de communication sans fil, puisque les étapes réalisées par les terminaux ou les stations de base et utilisées par le procédé de géolocalisation sont des étapes courantes pour le fonctionnement du système de communication qui ne sont pas nécessairement opérées avec pour objectif premier de participer à la mise en œuvre du procédé de géolocalisation.

Les modes de réalisation et de mise en œuvre de la présente invention ont été décrits à titre d'exemple non limitatif, et des variantes sont possibles.

En particulier, l'invention a été décrite pour un système de communication radio sans fil à bande ultra étroite adapté à des applications du type IoT, mais rien n'empêche de mettre en œuvre le procédé de géolocalisation selon l'invention pour d'autres types de système de communication comme par exemple des réseaux cellulaires GSM, UMTS, LTE, Wi-Fi, etc.

Les mesures représentatives du niveau de qualité de lien radio utilisées pour former une signature radio peuvent être effectuées par les stations de base, sur un lien radio montant, mais aussi par les terminaux, sur un lien radio descendant. Les mesures sont par exemple transmises à un serveur qui réalise alors les autres étapes du procédé de géolocalisation. Selon d'autres exemples, les mesures représentatives du niveau de qualité de lien radio pourraient être effectuées par le serveur lui-même, à partir d'informations reçues des terminaux ou des stations de base.

Comme indiqué précédemment, la valeur représentative de la qualité de lien radio peut être différente du niveau de RSSI. Cela peut être par exemple, un niveau d'atténuation du signal, un rapport signal sur bruit, ou bien un autre indicateur de qualité de canal radio. Cette valeur est cependant supposée stable dans le temps pour le système considéré à une position géographique donnée.

Différents algorithmes d'apprentissage automatique supervisé de régression peuvent être utilisés pour estimer la position géographique d'un terminal à partir de sa signature radio et de l'ensemble des données de référence. Le fait d'utiliser l'un ou l'autre de ces algorithmes ne constitue qu'une variante de mise en œuvre de l'invention.

Enfin, la méthode de sélection et le nombre N de mesures sélectionnées pour déterminer une signature radio de manière optimale peuvent varier en fonction du système de communication considéré. Les exemples correspondants utilisés dans la description ne doivent en conséquence pas être considérés comme étant limitatifs.

**Revendications**

1. Procédé (10) de géolocalisation d'un terminal (70), dit « terminal d'intérêt », d'un système (60) de communication sans fil comportant :

   - une détermination (22) de signatures radio associées respectivement à différentes positions géographiques connues, chaque signature radio correspondant à un ensemble de valeurs représentatives de la qualité de liens radio existant entre un dispositif (71) de calibration, situé à une desdites positions géographiques connues, et une pluralité de stations de base (81) dudit système (60) de communication sans fil, les signatures radio et leurs positions géographiques connues respectives associées formant un ensemble de données de référence,
   - une détermination (32) d'une signature radio pour ledit terminal d'intérêt situé à une position géographique à estimer,

   chaque détermination (22, 32) d'une signature radio comporte :

- une mesure (221, 321), pour chacune de la pluralité de stations de base (81), d'une valeur représentative de la qualité du lien radio existant entre le dispositif (71) de calibration ou le terminal (70) d'intérêt et la station de base considérée,
- une sélection (222, 322) de N valeurs parmi l'ensemble des valeurs mesurées,
- une formation (223, 323) de la signature radio en y incluant les N valeurs sélectionnées et les positions géographiques respectives des N stations de base utilisées pour mesurer lesdites N valeurs sélectionnées,

**caractérisé en ce que** le procédé (10) de géolocalisation comporte une estimation (34) de la position géographique dudit terminal d'intérêt avec un algorithme d'apprentissage supervisé de régression utilisant les N valeurs sélectionnées et les positions géographiques respectives des N stations de base correspondantes de la signature radio dudit terminal d'intérêt et de chacune des signatures radio de l'ensemble de données de référence, ainsi que les positions géographiques connues associées aux signatures radio de l'ensemble de données de référence.

2. Procédé (10) de géolocalisation selon la revendication 1 dans lequel les N valeurs sélectionnées correspondent aux N valeurs qui représentent les meilleures qualités de lien radio mesurées pour les stations de base (81).

3. Procédé (10) de géolocalisation selon la revendication 2 dans lequel les N valeurs sélectionnées sont classées par ordre décroissant de la qualité de lien radio.

4. Procédé (10) de géolocalisation selon l'une des revendications précédentes dans lequel le lien radio est un lien montant vers les stations de base (81) du système (60) de communication sans fil.

5. Procédé (10) de géolocalisation selon la revendication 4 dans lequel un dispositif (71) de calibration est un terminal (72) du système (60) de communication sans fil, dit « terminal de calibration », et la détermination (22) de la signature radio du terminal de calibration situé en une position géographique connue comporte les étapes suivantes :

   - émission (220) par le terminal (72) de calibration d'un message à destination de la pluralité de stations de base (81),
   - mesure (221), pour chacune de la pluralité de stations de base (81), d'une valeur représentative de la qualité du lien radio existant entre ledit terminal de calibration et la station de base considérée à partir du message reçu dudit terminal de calibration,
   - sélection (222), par un serveur (82) relié aux stations de base, de N valeurs parmi l'ensemble des valeurs mesurées,
   - formation (223), par le serveur (82), de la signature radio du terminal de calibration en y incluant les N valeurs sélectionnées et les positions géographiques des stations de base utilisées pour mesurer les N valeurs sélectionnées.

6. Procédé (10) selon la revendication 5, dans lequel, le terminal (72) de calibration étant équipé d'un système de positionnement, la détermination (22) de la signature radio du terminal (72) de calibration comporte des étapes de :

   - inclusion, dans le message émis par le terminal (72) de calibration à destination de la pluralité de stations de base (81), de la position géographique courante du terminal de calibration mesurée par le système de positionnement,
   - extraction (224), par le serveur (82), de la position géographique contenue dans ledit message.

7. Procédé (10) de géolocalisation selon l'une des revendications 5 à 6 dans lequel plusieurs terminaux (72) de calibration sont mis en œuvre pendant une durée prédéfinie pour former l'ensemble de données de référence.

8. Procédé (10) de géolocalisation selon l'une des revendications 5 à 6 dans lequel l'ensemble de données de référence est continuellement enrichi par de nouvelles données provenant de terminaux (72) de calibration.

9. Procédé (10) de géolocalisation selon l'une des revendications 4 à 8 dans lequel la détermination (32) de la signature radio du terminal d'intérêt situé en une position géographique à estimer comporte les étapes suivantes :

   - émission (320) par le terminal (70) d'intérêt d'un message à destination de la pluralité de stations de base (81),
   - mesure (321), pour chacune de la pluralité de stations de base (81), d'une valeur représentative de la qualité du lien radio existant entre ledit terminal d'intérêt et la station de base considérée à partir du message reçu dudit terminal d'intérêt,

- sélection (322), par un serveur (82) relié aux stations de base, de N valeurs parmi l'ensemble des valeurs mesurées,
- formation (323), par le serveur (82), de la signature radio du terminal d'intérêt en y incluant les N valeurs sélectionnées et les positions géographiques des stations de base utilisées pour mesurer les N valeurs sélectionnées.

10. Procédé (10) de géolocalisation selon l'une des revendications précédentes dans lequel la valeur représentative de la qualité du lien radio existant entre un terminal (70, 72) ou un dispositif (71) de calibration et une station de base (81) est un niveau de puissance reçue d'un signal radio échangé entre ladite station de base et ledit terminal (70, 72) ou ledit dispositif (71) de calibration.

11. Procédé (10) de géolocalisation selon l'une des revendications précédentes dans lequel le lien radio est un canal de communication à bande ultra étroite.

12. Procédé (10) de géolocalisation selon l'une des revendications précédentes dans lequel la position géographique estimée du terminal d'intérêt et la signature radio associée sont ajoutées à l'ensemble de données de référence.

13. Procédé (10) de géolocalisation selon l'une des revendications précédentes dans lequel le nombre N de valeurs sélectionnées lors de la détermination d'une signature radio est un entier positif compris entre 5 et 20.

14. Système (60) de communication sans fil comportant des terminaux (70) et un réseau d'accès (80) comportant une pluralité de stations de base (81) reliées à un serveur (82), ledit système comportant une base de données mémorisant un ensemble de données de référence, chaque donnée de référence correspondant à une signature radio associée à une position géographique connue, chaque signature radio comprenant N valeurs représentatives de la qualité de liens radio existant entre un dispositif (71) de calibration situé à une desdites positions géographiques connues et N stations de base (81) et les positions géographiques desdites N stations de base, le réseau d'accès (80) étant configuré pour :

- mesurer une valeur représentative de la qualité du lien radio existant entre chaque station de base (81) et un terminal (70) dont la position géographique doit être estimée, dit « terminal d'intérêt »,
- sélectionner N valeurs parmi l'ensemble des valeurs mesurées pour ledit terminal d'intérêt,
- former une signature radio correspondant à l'ensemble des N valeurs sélectionnées et des positions géographiques des stations de base utilisées pour mesurer les N valeurs sélectionnées;

**caractérisé en ce que** le réseau d'accès est en plus configuré pour :

- estimer la position géographique dudit terminal d'intérêt avec un algorithme d'apprentissage supervisé de régression utilisant les N valeurs sélectionnées et les positions géographiques respectives des N stations de base correspondantes de la signature radio dudit terminal d'intérêt et de chacune des signatures radio de l'ensemble de données de référence, ainsi que les positions géographiques connues associées aux signatures radio de l'ensemble de données de référence.

**Patentansprüche**

1. Verfahren (10) zur Geolokalisierung eines Endgeräts (70), "Endgerät von Interesse", eines drahtlosen Kommunikationssystems (60), das Folgendes aufweist:

- Bestimmung (22) von Funksignaturen, die jeweils verschiedenen bekannten geografischen Positionen zugeordnet sind, wobei jede Funksignatur einer Reihe von Werten entspricht, die für die Qualität der Funkverbindungen repräsentativ sind, die zwischen einer Kalibriervorrichtung (71) bestehen, die sich an einer der bekannten geografischen Positionen befindet, und einer Vielzahl von Basisstationen (81) des drahtlosen Kommunikationssystems (60), wobei die Funksignaturen und ihre zugehörigen bekannten geografischen Positionen einen Referenzdatensatz bilden,
- Bestimmung (32) einer Funksignatur für das Endgerät von Interesse, das sich an einer zu schätzenden geografischen Position befindet, wobei jede Bestimmung (22, 32) einer Funksignatur Folgendes aufweist:
- Messung (221, 321), für jede der Vielzahl von Basisstationen (81), eines Werts, der für die Qualität der bestehenden Funkverbindung zwischen der Kalibriervorrichtung (71) oder dem Endgerät (70) von Interesse und der betreffenden Basisstation repräsentativ ist,
- Auswahl (222, 322) von N Werten aus der Gesamtheit der gemessenen Werte,
- Bildung (223, 323) der Funksignatur, die die N ausgewählten Werte und die jeweiligen geografischen Positionen der N Basisstationen enthält, die zur Messung der N ausgewählten Werte verwendet werden,

**dadurch gekennzeichnet, dass** das Verfahren (10) zur Geolokalisierung eine Schätzung (34) der geografischen Position des Endgeräts von Interesse einen überwachten Regressionslernalgorithmus aufweist, der die N ausgewählten Werte und die jeweiligen geografischen Positionen der entsprechenden N Basisstationen der Funksignatur des Endgeräts und jeder der Funksignaturen des Referenzdatensatzes aufweist, sowie die bekannten geografischen Positionen in Verbindung mit den Funksignaturen des Referenzdatensatzes.

2.  Verfahren (10) zur Geolokalisierung nach Anspruch 1, wobei die N ausgewählten Werte den N Werten entsprechen, die die besten gemessenen Funkverbindungsqualitäten für die Basisstationen (81) repräsentieren.

3.  Verfahren (10) zur Geolokalisierung nach Anspruch 2, wobei die N ausgewählten Werte in absteigender Reihenfolge der Qualität der Funkverbindung klassifiziert werden.

4.  Verfahren (10) zur Geolokalisierung nach einem der vorhergehenden Ansprüche, wobei die Funkverbindung eine Uplink-Verbindung zu den Basisstationen (81) des drahtlosen Kommunikationssystems (60) ist.

5.  Verfahren (10) zur Geolokalisierung nach Anspruch 4, wobei eine Kalibriervorrichtung (71) ein Endgerät (72) des drahtlosen Kommunikationssystems (60), "Kalibrierendgerät", ist und die Bestimmung (22) der Funksignatur des Kalibrierendgeräts, das sich an einer bekannten geografischen Position befindet, folgende Schritte aufweist:

    - Sendung (220) durch das Kalibrierendgerät (72) einer Nachricht an die Vielzahl von Basisstationen (81),
    - Messung (221), für jede der Vielzahl von Basisstationen (81), eines repräsentativen Werts der Qualität der bestehenden Funkverbindung zwischen dem Kalibrierendgerät und der betreffenden Basisstation ausgehend von der von dem Kalibrierendgerät empfangenen Nachricht,
    - Auswahl (222), durch einen mit den Basisstationen verbundenen Server (82), von N Werten aus der Gesamtheit der gemessenen Werte,
    - Bildung (223), durch den Server (82), der Funksignatur des Kalibrierendgeräts, einschließlich der N ausgewählten Werte und der geografischen Positionen der Basisstationen, die zur Messung der N ausgewählten Werte verwendet werden.

6.  Verfahren (10) nach Anspruch 5, wobei das Kalibrierendgerät (72) mit einem Positionierungssystem ausgestattet ist, wobei die Bestimmung (22) der Funksignatur des Kalibrierendgeräts (72) folgende Schritte aufweist:

    - Einschluss der aktuellen geografischen Position des Kalibrierendgeräts, die von dem Positionierungssystem gemessen wurde, in die von dem Kalibrierendgerät (72) an die Vielzahl von Basisstationen (81) gesendete Nachricht,
    - Extraktion (224) der in der Nachricht enthaltenen geografischen Position durch den Server (82).

7.  Verfahren (10) zur Geolokalisierung nach einem der Ansprüche 5 bis 6, wobei mehrere Kalibrierendgeräte (72) für eine vordefinierte Zeit eingesetzt werden, um den Referenzdatensatz zu bilden.

8.  Verfahren (10) zur Geolokalisierung nach einem der Ansprüche 5 bis 6, wobei der Referenzdatensatz kontinuierlich mit neuen Daten aus Kalibrierendgeräten (72) erweitert wird.

9.  Verfahren (10) zur Geolokalisierung nach einem der Ansprüche 4 bis 8, wobei die Bestimmung (32) der Funksignatur des Endgeräts von Interesse, das sich an einer zu schätzenden geografischen Position befindet, folgende Schritte aufweist:

    - Sendung (320) durch das Endgerät (70) von Interesse einer Nachricht an die Vielzahl von Basisstationen (81),
    - Messung (321) für jede der Vielzahl von Basisstationen (81) eines repräsentativen Werts der Qualität der bestehenden Funkverbindung zwischen dem Endgerät von Interesse und der betreffenden Basisstation ausgehend von der von dem Endgerät von Interesse empfangenen Nachricht,
    - Auswahl (322) von N Werten aus allen gemessenen Werten durch einen Server (82), der mit den Basisstationen verbunden ist,

- Bildung (323), durch den Server (82), der Funksignatur des Endgeräts von Interesse, durch Einschließen der N ausgewählten Werte und der geografischen Positionen der Basisstationen, die zur Messung der N ausgewählten Werte verwendet werden.

**10.** Verfahren (10) zur Geolokalisierung nach einem der vorhergehenden Ansprüche, wobei der repräsentative Wert der Qualität der bestehenden Funkverbindung zwischen einem Endgerät (70, 72) oder einer Kalibriervorrichtung (71) und einer Basisstation (81) ein Leistungsniveau ist, das von einem Funksignal empfangen wird, das zwischen der Basisstation und dem Endgerät (70, 72) oder der Kalibriervorrichtung (71) ausgetauscht wird.

**11.** Verfahren (10) zur Geolokalisierung nach einem der vorhergehenden Ansprüche, wobei die Funkverbindung ein Ultraschmalband-Kommunikationskanal ist.

**12.** Verfahren (10) zur Geolokalisierung nach einem der vorhergehenden Ansprüche, wobei die geschätzte geografische Position des Endgeräts von Interesse und die zugehörige Funksignatur zu dem Referenzdatensatz hinzugefügt werden.

**13.** Verfahren (10) zur Geolokalisierung nach einem der vorhergehenden Ansprüche, wobei die Anzahl N der bei der Bestimmung einer Funksignatur ausgewählten Werte eine positive Ganzzahl zwischen 5 und 20 ist.

**14.** Drahtloses Kommunikationssystem (60), das Endgeräte (70) und ein Zugangsnetz (80) mit einer Vielzahl von Basisstationen (81) aufweist, die mit einem Server (82) verbunden sind, wobei das System eine Datenbank aufweist, die einen Satz von Referenzdaten speichert, wobei alle Referenzdaten einer Funksignatur entsprechen, die einer bekannten geografischen Position zugeordnet ist, wobei jede Funksignatur N Werte umfasst, die für die Qualität der zwischen einer Kalibriervorrichtung (71) bestehenden Funkverbindungen an einer der bekannten geografischen Positionen und N Basisstationen (81) und den geografischen Positionen der N Basisstationen repräsentativ sind, wobei das Zugangsnetz (80) zu Folgendem konfiguriert ist:

- Messen eines repräsentativen Werts der Qualität der bestehenden Funkverbindung zwischen jeder Basisstation (81) und einem Endgerät (70), dessen geografische Position geschätzt werden muss, dem "Endgerät von Interesse",
- Auswählen von N Werten aus allen gemessenen Werten für das Endgerät von Interesse,
- Bilden einer Funksignatur, die allen N ausgewählten Werten und den geografischen Positionen der Basisstationen entspricht, die zum Messen der N ausgewählten Werte verwendet werden;

**dadurch gekennzeichnet, dass** das Zugangsnetz ferner zu Folgendem konfiguriert ist:

- Schätzen der geografischen Position des Endgeräts von Interesse mit einem überwachten Regressionslernalgorithmus, der die N ausgewählten Werte und die jeweiligen geografischen Positionen der entsprechenden N Basisstationen der Funksignatur des Endgeräts von Interesse und jeder der Funksignaturen des Referenzdatensatzes sowie der bekannten geografischen Positionen verwendet, die mit den Funksignaturen des Referenzdatensatzes verbunden sind.

## Claims

**1.** Method (10) for geolocating a terminal (70), referred to as a "terminal of interest", of a wireless communication system (60) including:

- determining (22) radio signatures respectively associated with different known geographical positions, each radio signature corresponding to a set of values representative of the quality of radio links that exist between a calibration device (71), located in one of said known geographical positions, and a plurality of base stations (81) of said wireless communication system (60), the radio signatures and the associated respective known geographical positions thereof forming a reference data set,
- determining (32) a radio signature for said terminal of interest located in a geographical position that is to be estimated,

each determination (22, 32) of a radio signature includes:

- measuring (221, 321), for each base station of the plurality of base stations (81), a value representative of the quality of the radio link that exists between the calibration device (71) or the terminal (70) of interest and the base station considered,
- selecting (222, 322) N values from the set of measured values,
- forming (223, 323) the radio signature, including therein the N selected values and the respective geographical positions of the N base stations used to measure said N selected values,

**characterised in that** the geolocation method (10) comprises estimating (34) the geographical position of said terminal of interest with a regression supervised learning algorithm using the N selected values and the respective geographical positions of the corresponding N base stations of the radio signature of said terminal of interest and of each of the radio signatures of the reference data set, as well as the known geographical positions associated to the radio signatures of the reference data set.

2. Method (10) for geolocating according to claim 1, wherein the N selected values correspond to the N values that represent the best radio link qualities measured for the base stations (81).

3. Method (10) for geolocating according to claim 2, wherein the N selected values are ordered by descending order of radio link quality.

4. Method (10) for geolocating according to one of the preceding claims, wherein the radio link is an uplink to the base stations (81) of the wireless communication system (60).

5. Method (10) for geolocating according to claim 4, wherein a calibration device (71) is a terminal (72) of the wireless communication system (60), referred to as a "calibration terminal", and the determination (22) of the radio signature of the calibration terminal located in a known geographical position includes the following steps of:

   - transmitting (220), by the calibration terminal (72), a message to the plurality of base stations (81),
   - measuring (221), for each base station of the plurality of base stations (81), a value representative of the quality of the radio link that exists between said calibration terminal and the base station considered based on the message received from said calibration terminal,
   - selecting (222), by a server (82) connected to the base stations, N values from the set of measured values,
   - forming (223), by the server (82), the radio signature of the calibration terminal, including therein the N selected values and the geographical positions of the base stations used to measure the N selected values.

6. Method (10) according to claim 5, wherein, the calibration terminal (72) being equipped with a positioning system, the determination (22) of the radio signature of the calibration terminal (72) includes steps of:

   - including, in the message transmitted by the calibration terminal (72) to the plurality of base stations (81), the current geographical position of the calibration terminal measured by the positioning system,
   - extracting (224), by the server (82), the geographical position contained in said message.

7. Method (10) for geolocating according to one of claims 5 to 6, wherein a plurality of calibration terminals (72) are put into effect for a predefined duration in order to form the reference data set.

8. Method (10) for geolocating according to one of claims 5 to 6, wherein the reference data set is constantly enriched with new data originating from calibration terminals (72).

9. Method (10) for geolocating according to one of claims 4 to 8, wherein the determination (32) of the radio signature of the terminal of interest located in a geographical position to be estimated includes the following steps of:

   - transmitting (320), by the terminal (70) of interest, a message to the plurality of base stations (81),
   - measuring (321), for each base station of the plurality of base stations (81), a value representative of the quality of the radio link that exists between said terminal of interest and the base station considered based on the message received from said terminal of interest,
   - selecting (322), by a server (82) connected to the base stations, N values from the set of measured values,
   - forming (323), by the server (82), the radio signature of the terminal of interest, including therein the N selected values and the geographical positions of the base stations used to measure the N selected values.

10. Method (10) for geolocating according to one of the preceding claims, wherein the value representative of the quality of the radio link that exists between a terminal (70, 72) or a calibration device (71) and a base station (81) is a received signal strength indicator for a radio signal exchanged between said base station and said terminal (70, 72) or said calibration device (71).

11. Method (10) for geolocating according to one of the preceding claims, wherein the radio link is an ultra-narrowband communication channel.

12. Method (10) for geolocating according to one of the preceding claims, wherein the estimated geographical position of the terminal of interest and the associated radio signature are added to the reference data set.

13. Method (10) for geolocating according to one of the preceding claims, wherein the number N of values selected when determining a radio signature is a positive integer that lies in the range 5 to 20.

14. Wireless communication system (60) including terminals (70) and an access network (80) including a plurality of base stations (81) connected to a server (82), said system including a database storing a reference data set, each reference datum corresponding to a radio signature associated with a known geographical position, each radio signature comprising N values representative of the quality of radio links that exist between a calibration device (71) located in one of said known geographical positions and N base stations (81) and the geographical positions of said N base stations, the access network (80) being configured for:

    - measuring a value representative of the quality of the radio link that exists between each base station (81) and a terminal (70), the geographical position whereof must be estimated, referred to as the "terminal of interest",
    - selecting N values from the set of measured values for said terminal of interest,
    - forming a radio signature corresponding to the set of N selected values and geographical positions of the base stations used to measure the N selected values,
    - estimating the geographical position of said terminal of interest with a regression supervised learning algorithm using the N selected values and the respective geographical positions of the corresponding N base stations of the radio signature of said terminal of interest and of each of the radio signatures of the reference data set, as well as the known geographical positions associated to the radio signatures of the reference data set.

**Fig. 1**

**Fig. 2**

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016191775 A1

**Littérature non-brevet citée dans la description**

- **KHUONG AN NGUYEN** ; **ZHIYUAN LUO**. Reliable indoor location prediction using conformal prediction. Springer Science+Business Media Dordrecht, 2013

- **MOHAMED IBRAHIM** ; **MOUSTAFA YOUSSEF**. CellSense : An Accurate Energy-Efficient GSM Position System. IEEE, 2011